# EUROPÄISCHE PATENTSCHRIFT

(11) **EP 0 604 383 B1**
(45) Veröffentlichungstag und Bekanntmachung des Hinweises auf die Patenterteilung: **07.02.1996**
(21) Anmeldenummer: 93890174.1
(22) Anmeldetag: 06.09.1993
(51) Int. Cl.: B60C 11/04, B60C 11/12, B60C 11/03

(54) **Fahrzeugluftreifen**
Vehicle tyre
Bandage pneumatique pour véhicule

(30) Priorität: 24.12.1992 AT 2584/92
(43) Veröffentlichungstag der Anmeldung: 29.06.1994
(73) Patentinhaber: Semperit Reifen Aktiengesellschaft, A-2514 Traiskirchen (AT)
(72) Erfinder: Drosg, Wolfgang, Dipl.-Ing., A-1230 Wien (AT); Sauerzapf, Johannes, Dipl.-Ing., A-2700 Wr. Neustadt (AT)
(74) Vertreter: Vinazzer, Edith

(56) Entgegenhaltungen:
- EP-A- 0 325 552
- EP-A- 0 455 925
- DE-A- 3 912 358
- DE-U- 8 620 979
- US-A- 4 700 762

## Beschreibung

Die Erfindung betrifft einen Fahrzeugluftreifen mit einem Laufflächenprofil welches durch Nuten oder Rillen, insbesondere durch in Umfangsrichtung verlaufende Nuten und/oder durch im wesentlichen in Axialrichtung verlaufende Quernuten oder seitliche Rillen in Profilelemente, wie Profilblöcke und/oder Profilbänder unterteilt ist, wobei Profilelemente mit Lamellenfeineinschnitten vorgesehen sind, die mit zumindest im wesentlichen in Umfangsrichtung verlaufenden Entlüftungsnuten in Verbindung sind.

Fahrzeugluftreifen mit derartigen Laufflächenprofilen sind in unterschiedlichen Ausführungsvarianten bekannt. Zur Erhöhung der Traktions- und Griffeigenschaften sind die Profilblöcke mit Lamellenfeineinschnitten zu versehen, die durch geeignete Maßnahmen, insbesondere durch schmale Entlüftungsnuten, zu entlüften sind, um das Auftreten von unangenehmen und insgesamt das Abrollgeräusch erhöhenden Zischgeräuschen zu vermeiden. Derartige, dem Oberbegriff des Anspruchs 1 bzw. 4 entsprechende Fahrzeugluftreifen sind aus dem DE-U-8 620 979 bekannt. Diese Entlüftungsnuten sind als gerade und insbesondere in Umfangsrichtung verlaufende Nuten ausgebildet, die sich jedoch, vor allem wenn sie eine größere Längserstreckung aufweisen, als zusätzliche Geräuschquellen erweisen.

Hier setzt nun die Erfindung ein, deren Aufgabe darin besteht, bei einem Laufflächenprofil der eingangs genannten Art Maßnahmen zu ergreifen, die ein Entlüften von Lamellenfeineinschnitten bei gleichzeitiger weiterer Geräuschreduzierung bewirken.

Gelöst wird die gestellte Aufgabe erfindungsgemäß dadurch, daß die Entlüftungsnuten, in Draufsicht betrachtet, einer Kurve folgen, die sich zumindest abschnittsweise aus einer oder mehreren Kurven 2. oder höherer Ordnung zusammensetzt.

Nach der Erfindung wird die Möglichkeit geschaffen, Feineinschnitte, insbesondere in Profilelementen mit einer relativ langen Umfangserstreckung, die aus Stabilitätsgründen vorteilhaft sein können, wirkungsvoll zu entlüften, wobei gleichzeitig das Geräuschniveau gesenkt werden kann. Durch die Kurvenform der ansonsten im wesentlichen in Umfangsrichtung verlaufenden Entlüftungsnuten variiert deren Auftreffpunkt auf die Fahrbahn im Latschdurchgang während des Abrollens des Reifens in axialer Richtung, was das Auftreten stehender Wellen innerhalb der Entlüftungsnuten verhindert und somit insgesamt zur Vermeidung von Resonanzen und somit zu einem niedrigerem Geräuschpegel beiträgt. Dabei kann weiters die Kurvenform so angesetzt werden, daß beim Kurvenfahren eine Erhöhung der Seitenführungskraft erwirkt wird. Solche Entlüftungsnuten können ferner ohne weiteres so angeordnet werden, daß im Profilelement selbst ausgewogene Flächenverhältnisse geschaffen werden, was sich günstig auf die Profilstabilität auswirkt.

Nach einer weiteren vorteilhaften Ausgestaltung der Erfindung sind Feineinschnitte vorgesehen, die im wesentlichen in Axialrichtung verlaufen und die, in Draufsicht betrachtet, einer Kurve folgen, die sich zumindest abschnittsweise aus einer oder mehreren Kurven 2. oder höherer Ordnung zusammensetzt. Durch solche Feineinschnitte kann beim Kurvenfahren sowohl die übertragbare Umfangskraft als auch die Seitenführungskraft erhöht werden. Dabei ist es von Vorteil, wenn die Feineinschnitte einen Wendepunkt in ihrem Verlauf aufweisen, wobei die Steigung gegenüber der Axialrichtung im Wendepunkt zwischen 8 und 16°, insbesondere 12° beträgt und die Feineinschnitte in schulterseitig verlaufenden Profilelementen, vorzugsweise in Blöcken von Schulterblockreihen, angeordnet sind, wobei der Wendepunkt im Bereich zwischen 30 und 70 %, insbesondere ca. 50 %, der Profilelementbreite liegt.

Bei einer bevorzugten Ausführungsform der Erfindung haben die Entlüftungsnuten und/oder die Feineinschnitte zumindest im wesentlichen einen schwach S-förmigen oder wellenförmigen Verlauf.

Besonders vorteilhaft ist die Anordnung erfindungsgemäßer Entlüftungsnuten bei einem Profil mit mindestens drei, insbesondere mit vier breiten und zumindest im wesentlichen gerade verlaufenden Umfangsnuten, welche gemeinsam mit einer Vielzahl von Quernuten bzw. seitlichen Rillen das Profil in Profilblöcke unterteilen, wobei zumindest zwei Schulterblockreihen und zwei Mittelblockreihen mit Profilblöcken mit Lamellenfeineinschnitten vorgesehen sind, die durch zumindest im wesentlichen in Umfangsrichtung verlaufende Entlüftungsnuten mit zumindest einer seitlichen Rille in Verbindung sind. Dabei sind die Entlüftungsnuten zumindest in den Profilblöcken der Mittelblockreihen angeordnet, welche Blöcke, eine im wesentlichen doppelte Umfangserstreckung gegenüber der Umfangserstreckung der Blöcke in den Schulterblockreihen aufweisen, wobei die Profilblöcke in den Mittelblockreihen etwa mittig mit jeweils einer von der axial außen benachbarten Umfangsnut zur Blockmitte zu verlaufenden Sacknut versehen sind. Solche in ihrer Umfangserstreckung relativ große Blöcke im Mittelbereich der Lauffläche wirken sich günstig auf das Fahrverhalten aus.

Bei einer bevorzugten Ausführungsform der Erfindung setzt sich die Entlüftungsnut in den Blöcken der Mittelblockreihen aus zwei Entlüftungsnutteilen zusammen, die einerends in die Sacknut einmünden, wobei vorzugsweise diese Mündungbereiche in axialer Richtung gegeneinander versetzt sind.

Dabei ist es für die Blockstabilität von Vorteil, wenn die Sacknuten im Mündungsbereich der Entlüftungsnutteile eine Grundanhebung aufweisen, durch welche die Dessingtiefe insbesondere auf die Dessintiefe der Entlüftungsnutteile reduziert ist.

Nach einer weiteren Ausgestaltung der Erfindung sind die Enden von in benachbarte Blöcke einmündenden Entlüftungsnuten ebenfalls in axialer Richtung gegeneinander versetzt.

Weitere Merkmale, Vorteile und Einzelheiten der Erfindung werden nun anhand der Zeichnung, die zwei Ausführungsbeispiele darstellt, näher beschrieben. Dabei ist in den beiden Zeichnungsfiguren eine Draufsicht auf eine Teilabwicklung eines Laufflächenprofiles eines Fahrzeugreifens dargestellt.

Die prinzipielle Ausgestaltung des Reifens kann auf herkömmliche Art erfolgen und umfaßt somit im wesentlichen einen profilierten Laufstreifen, einen mehrlagigen Gürtel, eine Radialkarkasse, Seitenwände und Wulstbereiche mit Wulstkernen.

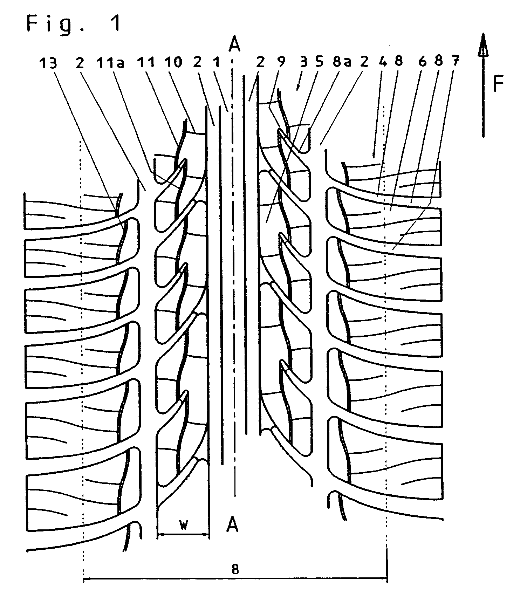

In den Zeichnungsfiguren kennzeichnet B die Breite des Laufstreifens des auf einer Normfelge montierten Reifens in der Bodenaufstandsfläche unter Normluftdruck und Normlast. Das Laufflächenprofil gemäß Fig. 1 weist vier gerade bzw. im wesentlichen gerade verlaufende breite Umfangsnuten 2 auf, die symmetrisch zur Äquatorlinie A-A verlaufen. Entlang der Äquatorlinie A-A ist dabei ein kontinuierlich umlaufendes Mittelband 1 angeordnet, welches durch zwei der breiten Umfangsnuten 2 von je einer Mittelblockreihe 3 getrennt ist. Die beiden weiteren Umfangsnuten 2 trennen die beiden Mittelblockreihen 3 von Schulterblockreihen 4. Die Schulterblockreihen 4 und die Mittelblockreihen 3 setzen sich aus Einzelblöcken 5 bzw. 6 zusammen, derart, daß zwei benachbarten Blöcken 6 aus den Schulterblockreihen 4 jeweils ein einzelner Block 5 aus den Mittelblockreihen 3 entspricht. Die Ausgestaltung der Blöcke 5, 6 bzw. der diese voneinander trennenden und in die mittleren Umfangsnuten 2 einmündenden und einen stetigen Verlauf aufweisenden Quernuten 7 ergibt ein sogenanntes gepfeiltes und laufrichtungsgebundenes Laufflächenprofil. Der Pfeil F gibt die Abrollrichtung des Reifens wieder. Jede zweite Quernut 8, die die Einzelblöcke 6 der Schulterblockreihen 4 voneinandert trennt, setzt sich im benachbarten Block 5 der Mittelblockreihen 3 als Sacknut 8a fort. Die Sacknuten 8a reichen soweit in die Blöcke 5 der Mittelblockreihen 3 hinein, daß sich ihre geschlossenen Enden in einem Abstand von 1/3 bis zu 2/3 der Blockbreite W, befindet. Dabei beträgt W 15 bis 30 % B, insbesondere 20 bis 25 % B. Die Sacknuten 8a werden zu ihren Enden zu bevorzugt kontinuierlich schmäler und besitzen in ihrem Endabschnitt eine Grundanhebung 9 mit einer Längserstreckung zwischen 2 und 10 mm, insbesondere ca. 4 mm. Durch diese Grundanhebungen 9 wird die Dessintiefe auf 1,5 bis 4 mm, insbesondere 2 mm, reduziert.

Durch die Anordnung der Sacknuten 8a werden nun im Laufflächenmittelbereich sehr stabile und in ihrer Umfangserstreckung relativ lange Blöcke gebildet, was sich sehr günstig auf das Fahrverhalten, insbesondere auch bei höheren Geschwindigkeiten, auswirkt. Durch die Sacknuten 8a ist gleichzeitig das Wasserableitvermögen in diesem Bereich sehr gut. Zur Erhöhung der Griffeigenschaften im Laufflächenmittelbereich sind in den Blöcken 5 der Mittelblockreihen 3 Lamellenfeineinschnitte 10, die im wesentlichen in Profilquerrichtung verlaufen, angeordnet. Die Lamellenfeineinschnitte weisen eine Breite auf, die kleiner 1 mm, insbesondere ca. 0,5 mm, beträgt. Dabei ist eine besondere Anordnung dieser Lamellenfeineinschnitte 10 mit Entlüftungsnuten 11 getroffen. Die Lamellenfeineinschnitte 10 folgen, in Draufsicht betrachtet, einer Kurve 2. Ordnung und verlaufen dabei zwischen den Umfangsnuten 2 und der Entlüftungsnut 11, die sich pro Block 5 aus 2 Teilen 11a zusammensetzt, die miteinander nicht fluchten. Jeder Entlüftungsnutteil 11a hat einen geschwungenen schwach S-förmigen Verlauf und folgt einer Kurve mit einem Wendepunkt, wobei der erste Endbereich im Bereich des axial außenseitigen Endes der Grundanhebung 9 einmündet und der zum betreffenden Block gehörende zweite Entlüftungsnutteil 11a am geschlossenen Ende der Sacknut 8a beginnt. Die zweiten Endbereiche der Entlüftungsnutteile 11a münden in die Quernuten 7, bezüglich benachbarter Blöcke 5 betrachtet, ebenfalls gegeneinander in axialer Richtung versetzt. Die Entlüftungsnuten 11 besitzen eine Breite von ca. 1 mm und eine Tiefe zwischen 1 und 4 mm, insbesondere 2 mm. Die geschwungene Form der Entlüftungsnuten 11 schafft nun ausgeglichene Flächenverhältnisse in den zum Teil durch die Sacknuten 8a geteilten Blöcke 5, was die Blockstabilität positiv beeinflußt.

Wie bekannt, dienen Entlüftungsnuten primär zum Abführen der in Lamelleneinschnitten eingeschlossenen Luft und daher zur Vermeidung von Zischgeräuschen. Durch die geschwungene Form der Entlüftungsnuten 11 variiert deren Auftreffpunkt auf die Fahrbahn im Latschdurchgang während des Abrollens des Reifens in axialer Richtung was das Auftreten stehender Wellen innerhalb der Entlüftungsnuten verhindert und somit insgesamt zur Verminderung von Resonanzen und zu einem niedrigerem Geräuschpegel beiträgt.

Auch in den Einzelblöcken 6 der Schulterblockreihen 4 sind, primär ebenfalls zur Erhöhung der Griffeigenschaften, Lamellenfeineinschnitte 12 vorgesehen. Auch diese Lamellenfeineinschnitte 12 münden mit ihrem einen Ende in Entlüftungsnuten 13, die ebenso wie die Entlüftungsnuten 11 in den mittleren Blockreihen 3 eine gleichermaßen geschwungene Form aufweisen. Die in den Schulterblöcken 6 verlaufenden Lamellenfeineinschnitte 12 bzw. deren Bereiche haben die Form einer Kurve 2. oder höherer Ordnung, derart, daß deren Wendepunkt im Bereich zwischen 30 und 70 % der Breite des Blockes 6, insbesondere bei ca. 50 %, liegt und dabei die Steigung gegenüber der Axialrichtung in diesem Wendepunkt zwischen 8 und 16°, insbesondere 12°, beträgt. Diese Ausgestaltung bewirkt, daß beim Kurvenfahren unter einem Schräglaufwinkel von bis zu 16°, insbesondere bis zu 12°, ein Teil der Feineinschnittkanten immer im rechten Winkel zum momentanen Geschwindigkeitsvektor steht. Das hat eine Erhöhung sowohl der übertragbaren Umfangskraft als auch der Seitenführungskraft auf trockenen und nassen Fahrbahnen beim Kurvenfahren zur Folge.

Die in die beiden mittleren Umfangsnuten 2 einmündenden Endbereiche der Quernuten 8 sind auf 1/3 bis zu 2/3, insbesondere auf die Hälfte der Dessintiefe angehoben, um zusätzlich stabilitätsbegünstigende Bereiche zu schaffen. Gleichzeitig sind die Blockkanten in diesem Bereich derart abgerundet gestaltet, daß die Quernuten 8 dort einen relativ breiten Einmündungsbereich zu den Umfangsnuten 2 aufweisen. Diese Maßnahme wirkt sich günstig auf den Abrieb der Lauffläche in diesem Bereich aus, da ein Abbrechen von ansonsten scharfen Profilkanten in diesem Bereich vermieden ist.

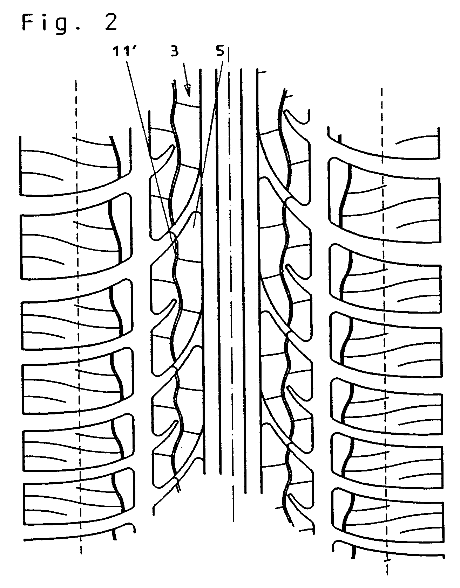

Fig. 2 zeigt eine Ausführungsvariante, die zum Großteil mit der in Fig. 1 dargestellten übereinstimmt. Abweichend ist insbesondere die Ausgestaltung der Entlüftungsnuten 11' in den Blöcken 5 der Mittelblockreihen 3. In Draufsicht betrachtet setzen sich die Entlüftungsnuten 11' im wesentlichen aus Kurven 2. oder höherer Ordnung zusammen, so daß sich ein etwa wellenförmiger Verlauf, der aus den bereits dargelegten Gründen vorteilhaft ist, ergibt.

Abweichend von der dargestellten Ausführungsform können die Entlüftungsnuten 11' über kurze Abschnitte auch einer Geraden folgen.

Ferner können die Lamellenfeineinschnitte in den Blöcken der Mittelblockreihen den jeweiligen Block auch zur Gänze durchqueren. Es wird darauf verwiesen, daß die vorliegende Erfindung auf die dargestellten Ausführungsbeispiele nicht eingeschränkt ist. Nach der Erfindung gestaltete Entlüftungsnuten und/oder Feineinschnitte können bei jedem Laufstreifenprofil, unabhängig davon ob dieses eine Blockstruktur mit Blockreihen oder eine Laufflächenbandstruktur oder eine Kombination dieser Grundstrukturen aufweist, vorgesehen werden.

## Patentansprüche

1. Fahrzeugluftreifen mit einem Laufflächenprofil, welches durch Nuten oder Rillen, insbesondere durch in Umfangsrichtung verlaufende Nuten und/oder durch im wesentlichen in Axialrichtung verlaufende Quernuten oder seitliche Rillen in Profilelemente, wie Profilblöcke und/oder Profilbänder unterteilt ist, wobei Profilelemente mit Lamellenfeineinschnitten vorgesehen sind, die mit zumindest im wesentlichen in Umfangsrichtung verlaufenden Entlüftungsnuten in Verbindung sind, dadurch gekennzeichnet, daß die Entlüftungsnuten (11, 11', 13), in Draufsicht betrachtet, einer Kurve folgen, die sich zumindest abschnittsweise aus einer oder mehreren Kurven 2. oder höherer Ordnung zusammensetzt.

2. Fahrzeugluftreifen nach Anspruch 1, dadurch gekennzeichnet, daß Feineinschnitte (10, 12) vorgesehen sind, die im wesentlichen in Axialrichtung verlaufen und die, in Draufsicht betrachtet, einer Kurve folgen, die sich zumindest abschnittsweise aus einer oder mehreren Kurven 2. oder höherer Ordnung zusammensetzt.

3. Fahrzeugluftreifen nach Anspruch 1 oder 2, dadurch gekennzeichnet, daß die Entlüftungsnuten (11, 11', 13) und/oder die Feineinschnitte (10, 12) zumindest im wesentlichen einen schwach S-förmigen oder wellenförmigen Verlauf aufweisen.

4. Fahrzeugluftreifen nach einem der Ansprüche 1 bis 3, dadurch gekennzeichnet, daß die einer schwach S-förmigen Kurve folgenden Feineinschnitte (12) einen Wendepunkt in ihrem Verlauf aufweisen, wobei die Steigung gegenüber der Axialrichtung im Wendepunkt zwischen 8 und 16°, insbesondere 12° beträgt.

5. Fahrzeugluftreifen nach Anspruch 4, dadurch gekennzeichnet, daß die Feineinschnitte (12) in schulterseitig verlaufenden Profilelementen, vorzugsweise in Blöcken (6) von Schulterblockreihen (4), angeordnet sind, wobei der Wendepunkt im Bereich zwischen 30 und 70 %, insbesondere ca. 50 %, der Profilelementbreite liegt.

6. Fahrzeugluftreifen nach einem der Ansprüche 1 bis 4, mit einem Laufflächenprofil mit mindestens drei, insbesondere mit vier breiten und zumindest im wesentlichen gerade verlaufenden Umfangsnuten, welche gemeinsam mit einer Vielzahl von Quernuten bzw. seitlichen Rillen das Profil in Profilblöcke unterteilen, wobei zumindest zwei Schulterblockreihen und zwei Mittelblockreihen mit Profilblöcken mit Lamellenfeineinschnitten vorgesehen sind, die durch zumindest im wesentlichen in Umfangsrichtung verlaufende Entlüftungsnuten mit zumindest einer seitlichen Rille in Verbindung sind, dadurch gekennzeichnet, daß die Entlüftungsnuten (11, 11'), die sich zumindest abschnittsweise aus einer oder mehreren Kurven 2. oder höherer Ordnung zusammensetzen, in Profilblöcken (5) der Mittelblockreihen (3) angeordnet sind, welche Profilblöcke (5) eine im wesentlichen doppelte Umfangserstreckung gegenüber der Umfangserstreckung der Blöcke (6) in den Schulterblockreihen (4) und etwa mittig jeweils eine von der axial außen benachbarten Umfangsnut zur Blockmitte zu verlaufende Sacknut aufweisen.

7. Fahrzeugluftreifen nach Anspruch 6, dadurch gekennzeichnet, daß sich die Entlüftungsnut (11) in den Blöcken (5) der Mittelblockreihen (3) aus zwei Entlüftungsnutteilen (11a) zusammensetzt, die einerends in die Sacknut (8a) einmünden, wobei vorzugsweise diese Mündungbereiche in axialer Richtung gegeneinander versetzt sind.

8. Fahrzeugluftreifen nach Anspruch 7, dadurch gekennzeichnet, daß die Sacknuten (8a) im Mündungsbereich der Entlüftungsnutteile (11a) eine Grundanhebung (9) aufweisen, durch welche die Dessintiefe insbesondere auf die Dessintiefe der Entlüftungsnutteile (11a) reduziert ist.

9. Fahrzeugluftreifen nach einem der Ansprüche 6 bis 8, dadurch gekennzeichnet, daß die Enden von in benachbarte Blöcke einmündenden Entlüftungsnuten (11) ebenfalls in axialer Richtung gegeneinander versetzt sind.

10. Fahrzeugluftreifen nach einem der Ansprüche 1 bis 9, dadurch gekennzeichnet, daß die Quernuten (7, 8, 8a) bzw. seitlichen Rillen durch ihren Verlauf ein gepfeiltes und somit laufrichtungsgebundenes Laufflächenprofil bilden.

## Claims

1. Pneumatic vehicle tyre, having a tread surface profile which is divided into profile elements, such as profile blocks and/or profile strips, by grooves or notches, more especially by grooves which extend in the circumferential direction and/or by transverse grooves or lateral notches which extend substantially in the axial direction, profile elements being provided with fine laminar incisions which communicate with air-release grooves extending at least substantially in the circumferential direction, characterised in that, when viewed from above, the air-release grooves (11, 11', 13) follow a curve which is formed at least in sections from one or more curves of the order of 2 or higher.

2. Pneumatic vehicle tyre according to claim 1, characterised in that fine incisions (10, 11) are provided, which extend substantially in the axial direction and which, when viewed from above, follow a curve which is formed at least in sections from one or more curves of the order of 2 or higher.

3. Pneumatic vehicle tyre according to claim 1 or 2, characterised in that the air-release grooves (11, 11', 13) and/or the fine incisions (10, 12) have at least substantially a gently S-shaped or undulatory configuration.

4. Pneumatic vehicle tyre according to one of claims 1 to 3, characterised in that the fine incisions (12), which follow a gently S-shaped curve, have a turning point in their configuration, whereby the pitch relative to the axial direction at the turning point is between 8° and 16°, more especially 12°.

5. Pneumatic vehicle tyre according to claim 4, characterised in that the fine incisions (12) are disposed in profile elements which extend on the shoulder side, more especially in blocks (6) of rows of shoulder blocks (4), the turning point lying in the region between 30 % and 70 %, more especially approx. 50 %, of the profile element width.

6. Pneumatic vehicle tyre according to one of claims 1 to 4, having a tread surface profile with at least three, more especially with four, wide and at least substantially rectilinearly extending circumferential grooves, which divide the profile into profile blocks together with a plurality of transverse grooves or lateral notches, wherein at least two rows of shoulder blocks and two rows of central blocks are provided with profile blocks having fine laminar incisions which communicate with at least one lateral notch by means of air-release grooves which extend at least substantially in the circumferential direction, characterised in that the air-release grooves (11, 11'), which are formed at least in sections from one or more curves of the order of 2 or higher, are disposed in profile blocks (5) of the rows of central blocks (3), which profile blocks (5) have a circumferential extension which is substantially twice the circumferential extension of the blocks (6) in the rows of shoulder blocks (4), and each profile block is provided approximately centrally with a blind groove which is to extend from the axially externally adjacent circumferential groove to the centre of the block.

7. Pneumatic vehicle tyre according to claim 6, characterised in that the air-release groove (11) in the blocks (5) of the rows of central blocks (3) is formed from two air-release groove portions (11a), which terminate at one end in the blind groove (8a), these termination regions preferably being offset from one another in the axial direction.

8. Pneumatic vehicle tyre according to claim 7, characterised in that the blind grooves (8a) have, in the termination region of the air-release groove portions (11a), a basic raised portion (9), by means of which the pattern depth is reduced more especially to the pattern depth of the air-release groove portions (11a).

9. Pneumatic vehicle tyre according to one of claims 6 to 8, characterised in that the ends of air-release grooves (11), which terminate in adjacent blocks, are likewise offset from one another in the axial direction.

10. Pneumatic vehicle tyre according to one of claims 1 to 9, characterised in that the transverse grooves (7, 8, 8a), or lateral notches, form a tread surface profile which is arrow-shaped, and hence adapted to the direction of travel, as a result of their configuration.

## Revendications

1. Bandage pneumatique pour véhicule automobile comprenant un profil de sa surface de roulement qui est subdivisé par des gorges ou des rainures, notamment par des gorges s'étendant en direction périphérique et/ou par des gorges transversales s'étendant essentiellement en direction axiale ou par des rainures latérales constituées dans des éléments profilés tels que des blocs et/ou des bandes, des éléments profilés munis de fines entailles de lamelles étant prévus et en liaison avec des rainures d'évacuation d'air s'étendant au moins essentiellement en direction périphérique, caractérisé en ce que les rainures d'évacuation d'air (11, 11', 13), vues en plan, suivent une courbe constituée au moins par sections par l'assemblage d'une ou plusieurs courbes d'ordre 2 ou plus.

2. Bandage pneumatique pour véhicule automobile selon la revendication 1, caractérisé en ce que sont prévues de fines entailles (10, 12) s'étendant essentiellement en direction axiale et qui, vues en plan, suivent une courbe constituée au moins par sections par l'assemblage d'une ou plusieurs courbes d'ordre 2 ou plus.

3. Bandage pneumatique pour véhicule automobile selon la revendication 1 ou 2, caractérisé en ce que les rainures d'évacuation d'air (11, 11', 13) et/ou les fines entailles (10, 12) suivent essentiellement un tracé en forme de S aplati ou de forme ondulée.

4. Bandage pneumatique pour véhicule automobile selon l'une des revendications 1 à 3, caractérisé en ce que les fines entailles (12) qui suivent une courbe en forme de S aplati comportent un point d'inflexion dans leur tracé, l'inclinaison par rapport à la direction axiale au point d'inflexion étant comprise entre 8 et 16°, et étant notamment de 12 °.

5. Bandage pneumatique pour véhicule automobile selon la revendication 4, caractérisé en ce que les fines entailles (12) sont prévues dans des éléments profilés s'étendant sur le côté des épaulements, de préférence dans des blocs (6) des rangées de blocs d'épaulement (4), le point d'inflexion étant situé dans une plage comprise entre 30 et 70%, et notamment d'environ 50%, de la largeur des éléments profilés.

6. Bandage pneumatique pour véhicule automobile selon l'une des revendications 1 à 4, comprenant une sculpture de sa surface de roulement avec au moins trois, et notamment quatre larges gorges périphériques s'étendant au moins sensiblement en ligne droite, qui subdivisent la sculpture en blocs profilés par une multiplicité de gorges transversales ou de rainures latérales, deux rangées de blocs d'épaulement au moins et deux rangées de blocs centrales étant prévues avec des blocs comprenant de fines entailles, qui sont reliées à au moins une rainure latérale par des rainures d'évacuation d'air s'étendant au moins essentiellement en direction périphérique, caractérisé en ce que les rainures d'évacuation d'air (11, 11') qui sont au moins en partie constituées par une ou plusieurs courbes d'ordre 2 ou plus sont prévues dans des blocs profilés (5) des rangées de blocs centrales (3), lesquels blocs (5) ont une extension périphérique sensiblement doublée par rapport à l'extension périphérique des blocs (6) des rangées de blocs d'épaulement (4), et sont munis sensiblement en leur centre d'une rainure en cul-de-sac s'étendant à partir de la rainure périphérique axiale externe en direction du centre des blocs.

7. Bandage pneumatique pour véhicule automobile selon la revendication 6, caractérisé en ce que la rainure d'évacuation d'air (11) est constituée dans les blocs (5) des rangées centrales (3) au moyen de deux sections (11a) qui débouchent à une extrémité dans la rainure en cul-de-sac (8a), ces zones où elles débouchent étant de préférence décalées l'une par rapport à l'autre en direction axiale.

8. Bandage pneumatique pour véhicule automobile selon la revendication 7, caractérisé en ce que les rainures en cul-de-sac (8a) présentent dans la région où débouchent les sections des parties de rainures d'évacuation d'air (11a) une surélévation (9) de leur fond par laquelle la profondeur de la sculpture est réduite en particulier à la profondeur de la sculpture des sections des rainures d'évacuation d'air (11a).

9. Bandage pneumatique pour véhicule automobile selon l'une des revendications 6 à 8, caractérisé en ce que les extrémités des rainures d'évacuation d'air (11) qui débouchent dans des blocs voisins sont également décalées les unes par rapport aux autres en direction axiale.

10. Bandage pneumatique pour véhicule automobile selon l'une des revendications 1 à 9, caractérisé en ce que les gorges transversales (7, 8, 8a) ou les rainures latérales forment par leur tracé une sculpture en flèche et de ce fait un profil de surface de roulement lié à la direction de la marche.
